Europäisches Patentamt

European Patent Office

Office européen des brevets

(11) Veröffentlichungsnummer: **0 066 308**
**A1**

## (12) EUROPÄISCHE PATENTANMELDUNG

(21) Anmeldenummer: **82200550.0**

(22) Anmeldetag: **06.05.82**

(51) Int. Cl.³: **B 62 D 1/18**

(30) Priorität: **03.06.81 DE 3121932**

(43) Veröffentlichungstag der Anmeldung:
**08.12.82 Patentblatt 82/49**

(84) Benannte Vertragsstaaten:
**AT BE CH DE FR GB IT LI LU NL SE**

(71) Anmelder: **KARL SCHMIDT GMBH**
**Christian-Schmidt-Strasse 8/12**
**D-7107 Neckarsulm(DE)**

(72) Erfinder: **Grothe, Klaus**
**Aschaffenburger Strasse 127**
**D-8750 Aschaffenburg 8(DE)**

(72) Erfinder: **Bauer, Wolfgang**
**Welzheimer Strasse 5**
**D-8757 Karlstein 1(DE)**

(74) Vertreter: **Fischer, Ernst, Dr.**
**Reuterweg 14**
**D-6000 Frankfurt am Main 1(DE)**

(54) Lenkeinrichtung.

㊲ Der lenkgetriebeseitige und der lenkradseitige längsverschiebliche sowie winkelverlagerbare Teil einer geteilten Lenkwelle einer Lenkeinrichtung für Kraftfahrzeuge sind über eine Kupplung miteinander verbunden.

Um die Längsverschiebung und Winkelverlagerung des lenkradseitigen Lenkwellenteils unmittelbar über die Lenkwelle zu ermöglichen, ist lenkgetriebeseitig ein U-förmiges Element (2). ortsfest angeordnet, auf dessen den lenkgetriebeseitigen Lenkwellenteil (3) umgebenden Schenkeln die den lenkradseitigen Lenkwellenteil umgebenden Schenkel eines lenkradseitig angeordneten U-förmigen Elements längsverschieblich sind. Die aufeinander gleitenden Schenkelpaare sind jeweils über eine Drehachse winkelverlagerbar und die beiden Lenkwellenteile über einen am lenkgetriebeseitigen Lenkwellenteil befestigten Mitnehmerarm verbunden, in dem ein den lenkradseitigen Lenkwellenteil führendes Gelenklager angeordnet ist.

EP 0 066 308 A1

Croydon Printing Company Ltd.

./...

Fig.1

KARL SCHMIDT GMBH
Christian-Schmidt-Straße 8/12
7107 Neckarsulm

Prov. Nr. 8687 KSL

Lenkeinrichtung
----------------

Die Erfindung betrifft eine Lenkeinrichtung für Kraftfahrzeuge, bestehend aus einem lenkradseitigen und einem lenkgetriebeseitigen Lenkwellenteil, die über eine eine Längsverschiebung und Winkelverlagerung des lenkradseitigen Lenkwellenteils zulassende Kupplung miteinander verbunden sind.

Aus Gründen der Sicherheit und des Komforts ist es bekannt, die Lenksäule bzw. -welle axial verschieb- und winkelverlagerbar zu gestalten. So ist in dem DE-GM 78 22 555 eine geteilte Lenksäule beschrieben, die zusammen mit einer Lagerhülse in ihrer Länge und zusammen mit einem diese Lagerhülse umhüllenden und in Drehrichtung sperrenden Lagerkörper in ihrer Neigung bezogen auf die Fahrzeuglängsachse verstellbar ist. In der DE-AS 19 49 241 ist ferner eine Lenkeinrichtung für Kraftfahrzeuge vorgesehen, die eine durch ein Lenkrad drehbare Lenkwelle aufweist, die in einer Längssäule geführt und gelagert ist und bei der die Lenkwelle außerdem zur Verschwenkung innerhalb einer Kulisse ein Kardangelenk aufweist. Die Lenksäule besteht aus einem dem Lenkgetriebe zugewandten festen und einem dem Lenkrad zugewandten, um seine Längsmittelachse drehbaren Teil, an dem die Kulisse befestigt ist. Ferner ist der mit dem Lenkrad verbundene Teil der Lenkwelle teleskopartig nach oben ausziehbar gestaltet.

- 2 -

Der Nachteil dieser Lenkeinrichtungen besteht im wesentlichen darin, daß die Verstellbarkeit von Länge und Winkel der Lenkwelle nur mit einem relativ hohen Aufwand möglich sind, insbesondere weil die die Längenverschiebung und Winkelverlagerung zulassenden Mittel getrennt voneinander angeordnet sind. Ferner ist bei der Lenkeinrichtung nach der DE-AS 19 49 241 nur ein stufenweises Verstellen von Länge und Winkel der Lenkwelle möglich.

Es ist daher die Aufgabe der vorliegenden Erfindung, eine Lenkeinrichtung für Kraftfahrzeuge der eingangs beschriebenen Bauweise so zu gestalten, daß mit vergleichsweise einfachen Mitteln eine Längenverschiebung und Winkelverlagerung des dem Lenkrad zugewandten Lenkwellenteils unmittelbar über die Lenkwelle möglich ist.

Die Lösung dieser Aufgabe besteht aus einem lenkgetriebeseitig ortsfest angeordneten U-förmigen Element, zwischen dessen Schenkeln der durch die Basis des U-förmigen Elements drehbar geführte lenkradseitige Abschnitt des lenkgetriebeseitigen Lenkwellenteils ragt, einem mit seinen Schenkeln auf den Schenkelflächen des lenkgetriebeseitig angeordneten U-förmigen Elements längsverschieblich gleitenden, lenkradseitig angebrachten U-förmigen Element, zwischen dessen Schenkeln der in der Basis des U-förmigen Elements drehbar gelagerte lenkgetriebeseitige Abschnitt des lenkradseitigen Lenkwellenteils ragt, wobei die aufeinander gleitenden Schenkelpaare jeweils über eine senkrecht zu den Schenkelflächen stehende Drehachse winkelverlagerbar und die beiden Lenkwellenteile über einen am lenkradseitigen Ende des lenkgetriebeseitigen Lenkwellenteils starr befestigten Mitnehmerarm, der ein den lenkradseitigen Lenkwellenteil führendes Gelenklager aufweist, verbunden sind.

Damit die Längsverschiebung und Winkelverlagerung des lenkradseitigen Lenksäulenteils unabhängig voneinander durchführbar sind, sind die Schenkel des lenkradseitig angeordneten U-förmigen Elements jeweils mit einem sich in ihrer Längsrichtung der Schenkel erstreckenden Langloch versehen, dessen Länge der maximalen Länge des Verschiebungsweges des lenkradseitigen Lenkwellenteils entspricht, wobei wenigstens die das eine Paar der aufeinandergleitenden Schenkel verbindende Drehachse gleichzeitig als Spannelement zur Erzeugung des Reibungsschlusses zwischen den aufeinandergleitenden Schenkeln ausgebildet ist.

Einer der Schenkel des lenkgetriebeseitig angebrachten U-förmigen Elements besitzt unterhalb der Drehachse ein quer zu seiner Längsrichtung verlaufendes kreisbogenförmiges Langloch, dessen Kreisbogenlänge dem Winkel der maximalen Winkelverlagerung des lenkradseitigen Lenkwellenteils entspricht, wobei durch das kreisbogenförmige Langloch und das Langloch des auf diesem Schenkel gleitenden Schenkels des lenkradseitig angebrachten U-förmigen Elements ein Spannelement eingesetzt ist, das den Reibungsschluß zwischen den beiden aufeinandergleitenden Schenkeln erzeugt.

Die Erfindung ist in den Zeichnungen beispielhaft dargestellt und wird nachfolgend näher erläutert. Es zeigen:

Fig. 1    eine Draufsicht auf die unverkleidete Lenkeinrichtung,

Fig. 2    eine Seitenansicht der Lenkeinrichtung und

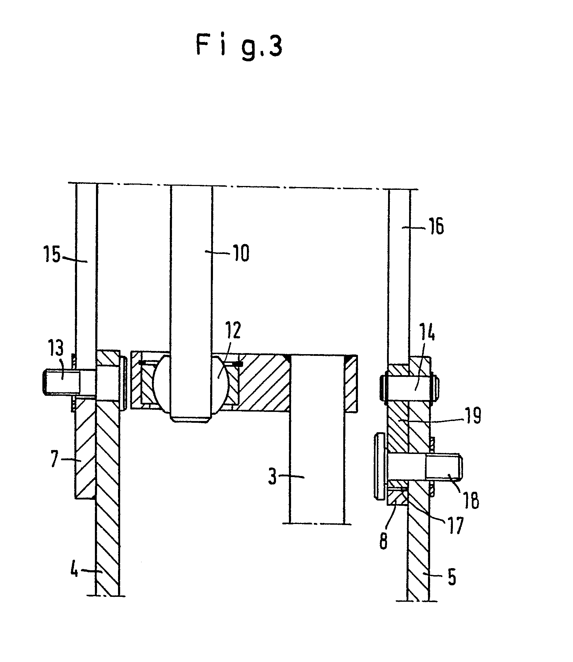

Fig. 3    einen Teillängsschnitt durch die Mittelebene der Schenkel der U-förmigen Elemente.

Durch die Basis des ortsfest am Kraftfahrzeug 1 angebrachten U-förmigen Elements 2 ist der lenkgetriebeseitige Lenkwellenteil 3' drehbar gelagert geführt, wobei sein zwischen den Schenkeln 4, 5 des U-förmigen Elements verlaufender

Lenkwellenabschnitt 3 parallel zur Längsmittelachse 6 der Lenkwelle versetzt ist. Auf der Außenfläche des einen Schenkels 4 und auf der Innenseite des anderen Schenkels 5 des U-förmigen Elements 2 sind die Schenkel 7, 8 des lenkradseitig angebrachten U-förmigen Elements 9 gleitend verschiebbar gelagert. Durch die Basis des lenkradseitig angeordneten U-förmigen Elements 9 ist der lenkradseitige Lenkwellenteil 10' drehbar gelagert geführt und verläuft mit dem im Bereich zwischen den Schenkeln 7, 8 des U-förmigen Elements 9 liegenden Abschnitt 10 parallel versetzt zur Längsmittelachse 6 der Lenkwelle. Die Lenkwellenabschnitte 10, 10' des lenkradseitigen Lenkwellenteils sind starr über ein Mitnehmerarm 20 verbunden. Der lenkgetriebeseitige und der lenkradseitige Lenkwellenteil 3, 3'; 10, 10' sind über einen am lenkradseitigen Ende des lenkgetriebeseitigen Lenkwellenteils 3 angebrachten Mitnehmerarm 11, in dem sich ein Gelenklager 12 befindet, in der Weise miteinander verbunden, daß der lenkradseitige Lenkwellenteil 10 in dem Gelenklager 12 geführt ist. Die aufeinandergleitenden Schenkelpaare 4, 5; 7, 8 der U-förmigen Elemente 2, 9 sind jeweils durch eine im Bereich des oberen Endes der Schenkel 4, 5 des lenkgetriebeseitig angebrachten U-förmigen Elements 2 angebrachte Drehachse 13, 14 miteinander verbunden, wobei die eine Drehachse 14 als Spannelement ausgebildet ist, das zur Erzeugung des Reibschlusses zwischen den beiden aufeinandergleitenden Schenkeln 4, 7 dient. In den beiden Schenkeln 7, 8 des lenkradseitig angebrachten U-förmigen Elements 9 befindet sich jeweils ein in Schenkellängsrichtung erstreckendes Langloch 15, 16, die die Längsverschiebung des lenkradseitig angeordneten Lenkwellenteils 10, 10' ermöglichen. Im Schenkel 5 des lenkgetriebeseitig angeordneten U-förmigen Elements 2 ist wenig unterhalb der Drehachse 14 ein kreisbogenförmiges, quer zur Längsrichtung des Schenkels 5 verlaufendes Langloch 17 angebracht, in das ein Spannelement 18 eingefügt ist, das zusammen mit der Drehachse 14 in entsprechende Bohrungen eines im Langloch 16 des Schenkels 8 verschiebbar gelagerten Kulissenstein 19 eingesetzt sind. Infolge der Anordnung des Langlochs 17 wird die Winkelverlagerung des lenkradseitigen Lenksäulenteils 10, 10' möglich. Das Spannelement 18 dient zur Herstellung des Reibungsschlusses zwischen den aufeinandergleitenden Schenkeln 5, 8 der U-förmigen Elemente 2, 9.

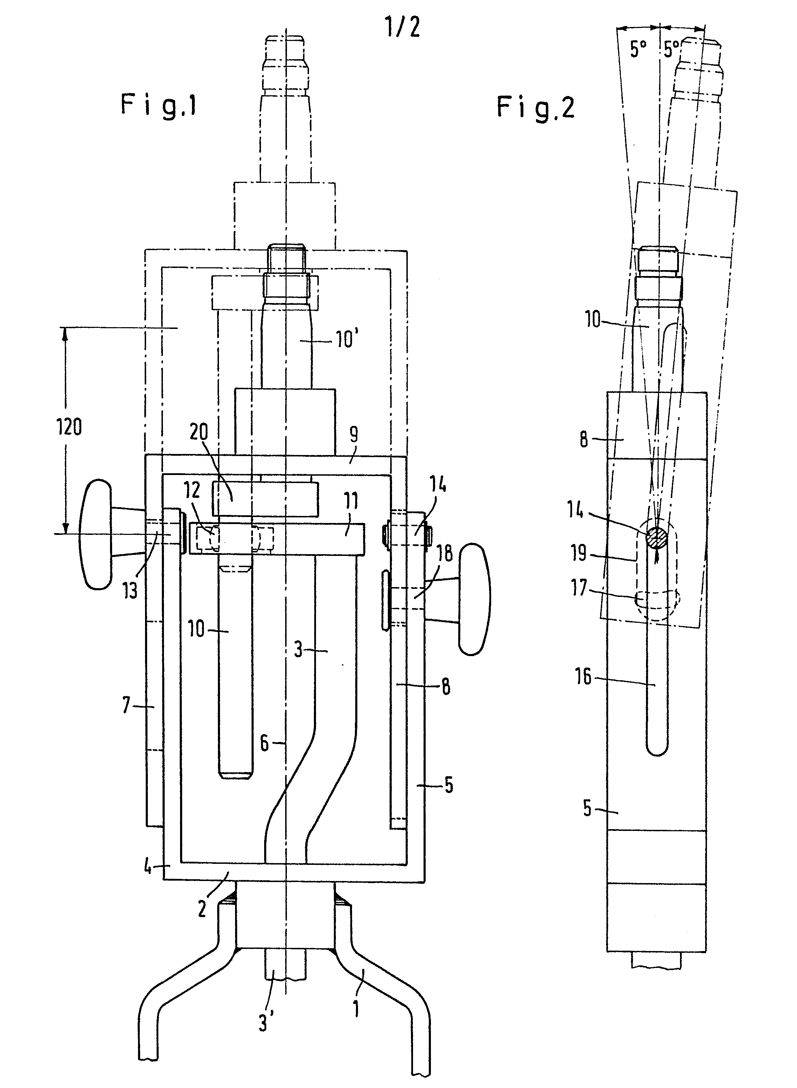

Die in Fig. 1 und Fig. 2 strich-punktiert eingezeichneten Linien zeigen den lenkradseitigen Teil 10, 10' der Lenkwelle in Längsrichtung um 120 mm zum Fahrer hin verschoben und um $5^{\circ}$ winkelverlagert.

Die mit der Erfindung erzielten Vorteile bestehen insbesondere darin, daß die Längsverschiebung und Winkelverlagerung mit relativ einfachen Mitteln unmittelbar über die Lenkwelle möglich und beide Vorgänge unabhängig voneinander durchführbar sind.

PATENTANSPRÜCHE
----------------

1. Lenkeinrichtung für Kraftfahrzeuge, bestehend aus einem lenkradseitigen und einem lenkgetriebeseitigen Lenkwellenteil, die über eine eine Längsverschiebung und Winkelverlagerung des lenkradseitigen Lenkwellenteils zulassende Kupplung miteinander verbunden sind, gekennzeichnet durch ein lenkgetriebeseitig ortsfest angeordnetes U-förmiges Element (2), zwischen dessen Schenkel (4, 5) der durch seine Basis drehbar geführte lenkradseitige Abschnitt (3') des lenkgetriebeseitigen Lenkwellenteils (3) ragt, ein mit seinen Schenkeln (7, 8) auf den Schenkeln des lenkgetriebeseitig angeordneten U-förmigen Elements längsverschieblich gleitenden, lenkradseitig angeordneten U-förmiges Element (9), zwischen dessen Schenkeln der in der Basis des U-förmigen Elements drehbar gelagerte lenkgetriebeseitige Abschnitt (10) des lenkradseitigen Lenkwellenteils (10') ragt, wobei die aufeinandergleitenden Schenkelpaare der U-förmigen Elemente jeweils über eine senkrecht zu den Schenkelflächen stehende Drehachse (13, 14) winkelverlagerbar und die beiden Lenkwellenteile (3, 10) über einen am lenkradseitigen Ende des lenkgetriebeseitigen Lenkwellenteils starr befestigten, mit einem Gelenklager (12), in dem der lenkradseitige Lenkwellenteil geführt ist, versehenen Mitnehmerarm (11) verbunden sind.

2. Lenkeinrichtung nach Anspruch 1, dadurch gekennzeichnet, daß die Schenkel (7, 8) des lenkradseitig angeordneten U-förmigen Elements (9) jeweils mit einem in Längsrichtung der Schenkel verlaufenden, in seiner Länge der maximalen Länge des Verschiebungsweges des lenkradseitigen Längswellenteils (10, 10') entsprechenden Langloch (16), in das die Drehachse (14) hineinragt, versehen sind.

3. Lenkeinrichtung nach den Ansprüchen 1 und 2, <u>dadurch gekennzeichnet</u>, daß wenigstens eine der Drehachsen (13) als Spannelement ausgebildet ist.

4. Lenkeinrichtung nach den Ansprüchen 1 bis 3, <u>dadurch gekennzeichnet</u>, daß einer der Schenkel (5) des lenkgetriebeseitig angebrachten U-förmigen Elements (2) ein quer zu seiner Längsrichtung verlaufendes kreisbogenförmiges Langloch (17) aufweist, dessen Kreisbogenlänge dem Winkel der maximalen Winkelverlagerung des lenkradseitigen Lenksäulenteils (10, 10') entspricht, wobei in das kreisbogenförmige Langloch sowie in das Langloch (16) des auf diesem Schenkel (5) gleitenden Schenkels (8) des lenkradseitig angebrachten U-förmigen Elements (9) ein Spannelement (18) eingesetzt ist.

Fig.1

Fig.2

# Fig.3

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 360 454 (CHRYSLER) *Patentansprüche; Figuren 1-5* | 1 | B 62 D 1/18 |
| A | FR-A-1 581 191 (CITROEN) | | |
| D | DE-B-1 949 241 (KLÖCKNER-HUMBOLDT-DEUTZ) | | |
| D | DE-U-7 822 555 (MASCHINENFABRIK AUGSBURG-NÜRNBERG) | | |

RECHERCHIERTE SACHGEBIETE (Int. Cl. ³)

B 62 D

Der vorliegende Recherchenbericht wurde für alle Patentansprüche erstellt.

| Recherchenort | Abschlußdatum der Recherche | Prüfer |
|---|---|---|
| DEN HAAG | 03-09-1982 | PIRIOU J.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument